# EUROPÄISCHE PATENTSCHRIFT

(11) **EP 1 185 455 B1**
(45) Veröffentlichungstag und Bekanntmachung des Hinweises auf die Patenterteilung: **30.01.2008**
(21) Anmeldenummer: 00938757.2
(22) Anmeldetag: 06.06.2000
(51) Int. Cl.: B64C 13/50, B64D 31/04, G05D 1/00, G05G 5/03

(54) **VORRICHTUNG ZUM STEUERN EINES TRIEBWERKES**
DEVICE FOR CONTROLLING AN ENGINE
DISPOSITIF POUR COMMANDER UN GROUPE MOTEUR

(30) Priorität: 11.06.1999 DE 19926563
(43) Veröffentlichungstag der Anmeldung: 13.03.2002
(73) Patentinhaber: Wittenstein AG, 97999 Igersheim (DE)
(72) Erfinder: SMITH, Kenneth, D-71032 Böblingen (DE)
(74) Vertreter: Weiss, Peter
(86) Internationale Anmeldenummer: PCT/EP2000/005135
(87) Internationale Veröffentlichungsnummer: WO 2000/076843

(56) Entgegenhaltungen:
- GB-A- 2 114 717
- US-A- 4 494 061

## Beschreibung

Die vorliegende Erfindung betrifft eine Vorrichtung zum Steuern eines Triebwerkes, insbesondere eines Flugzeuges mit zumindest einen in einem Gehäuse bewegbar gelagerten und einem Führungselement zugordneten Gashebel und einer Regelungseinrichtung zum zusätzlichen automatischen Antreiben des Gashebels.

Derartige Vorrichtungen sind in vielfältiger Form und Ausführung auf dem Markt bekannt und gebräuchlich. Sie dienen insbesondere zum Steuern und Inbetriebnehmen eines Triebwerkes bspw. eines Flugzeuges.

Nachteilig an derartigen herkömmlichen Vorrichtungen ist, dass sie nicht genügend Sicherheit leisten, wenn bspw. im Betrieb mit einem Autopiloten der Stromkreis oder sogar der Regelungsmotor ausfällt.

Häufig ist dann nachteilig, dass der Pilot nicht erkennen kann, in welcher Lage und Position sich tatsächlich der Gashebel bzw. der Betriebszustand des Triebwerkes befindet.

Dies kann zu erheblichen unerwünschten Folgen, insbesondere auch zu Abstürzen von Flugzeugen führen.

Die GB 2 114 717 A offenbart eine Steuerungseinrichtung für Flugzeuge oder Schiffe, wobei bspw. eine Steuerungsstange linear bewegbar und linear geführt ist. Dabei kann diese lineare Bewegung mittels einer Spindel und einem elektrischen Motor unterstützt werden.

Der vorliegenden Erfindung liegt die Aufgabe zugrunde eine Vorrichtung der eingangs genannten Art zu schaffen mit welcher auf einfache, sichere und kostengünstige Weise eine Regelung und Steuerung eines Triebwerkes permanent manuell und/oder automatisch möglich ist.

Zur Lösung dieser Aufgabe führen die Merkmale des Kennzeichens des Patentanspruches 1.

Bei der vorliegenden Erfindung sitzt der Gashebel auf einer Spindel, die über einen Regelungsmotor für einen Betrieb mittels Autopiloten antreibbar ist. Dann erkennt der Pilot in jeder Lage und Situation den aktuellen Zustand, insbesondere Betriebszustand des Triebwerkes.

Fällt bspw. dieser Regelungsmotor aus, so kann er manuell den Gashebel betätigen. Durch die Betätigung des Gashebels dreht sich ein Führungselement, an welchem ein Wegmesssystem sitzt. Dieses Wegmesssystem übermittelt dann die entsprechende Information direkt oder indirekt über einen Rechner an das Triebwerk. Dann ist die Bewegung des Gashebels unabhängig vom Regelungsmotor.

Dabei soll im Rahmen der vorliegenden Erfindung liegen, auch andere Wegmesssysteme zu verwenden, die bspw. dazu geeignet sind, eine Drehbewegung oder eine Linearbewegung des Gashebels zu erkennen und in ein Signal umzuwandeln.

Dabei kann das Wegmesssystem induktiver, magnetischer und/oder optischer Art sein. Hier sei der Erfindung keine Grenze gesetzt.

Wichtig bei der vorliegenden Erfindung ist ferner, dass der Gashebel rotatorisch radial in einem Führungsschlitz auf einem Führungselement geführt ist, welches eine Drehbewegung um eine Achse ausführt. Diese Drehbewegung des Führungselementes wird dann auf das Wegmesssystem übertragen.

Ferner ist von Vorteil bei der vorliegenden Erfindung, dass ohne elektrische Energie durch reine manuelle Bewegung des Gashebels eine rotatorische Bewegung des Führungselementes auf das Wegmesssystem direkt übertragen wird. Dieses liefert dann die entsprechenden Signale zur Steuerung des Triebwerkes. Hierdurch wird zusätzlich die Sicherheit zum Steuern und Inbetriebnehmen eines Triebwerkes erhöht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Längsschnitt durch eine Vorrichtung zum Steuern eines Triebwerkes;
Figur 2 einen schematisch dargestellten Querschnitt durch die Vorrichtung zum Steuern eines Triebwerkes gemäss Figur 1 entlang Linie II-II;
Figur 3 einen schematisch dargestellten Längsschnitt durch ein weiteres Ausführungsbeispiel der Vorrichtung zum Steuern eines Triebwerkes gemäss Figur 1.

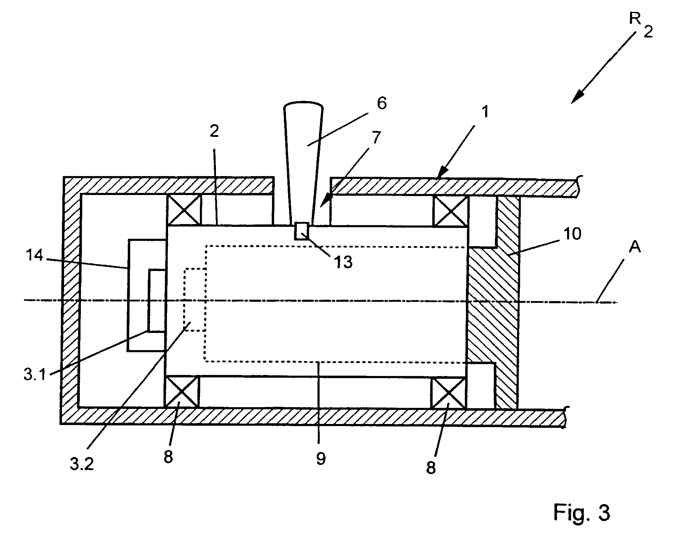

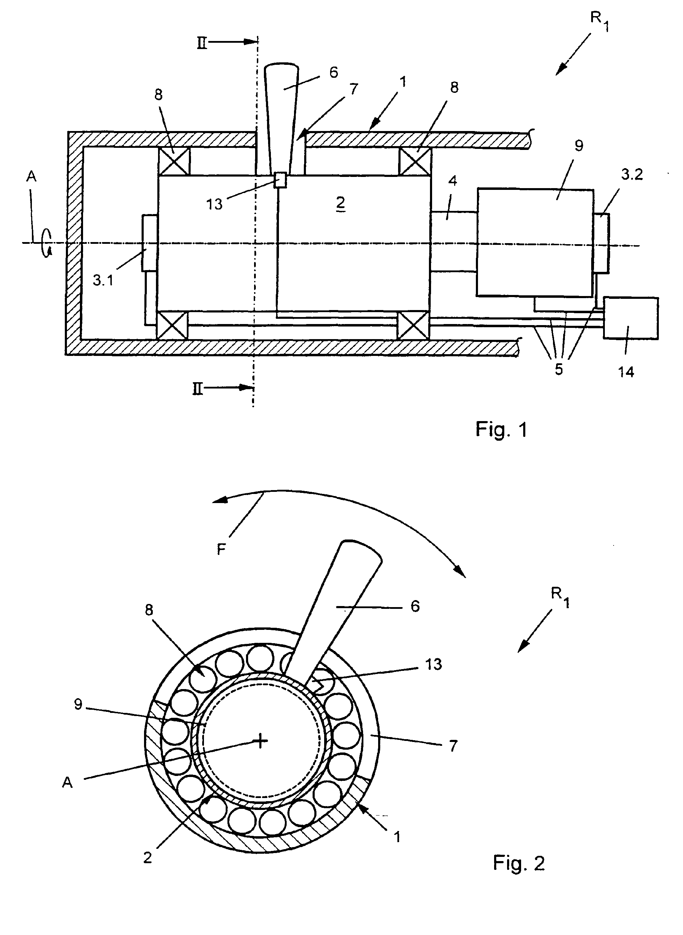

Gemäss Figur 1 weist eine erfindungsgemässe Vorrichtung R₁ zum Steuern eines hier nicht dargestellten Triebwerkes, insbesondere eines Flugzeuges ein Gehäuse 1 auf, in welchem vorzugsweise in seiner Längsrichtung ein Führungselement 2 drehbar um eine Achse A gelagert ist. Einends sitzt an dem Führungselement 2 ein Wegmesssystem 3.1 und andernends über eine Wellenkupplung 4 die Regelungseinrichtung 9, insbesondere ein Regelungsmotor auf. Diesem ist endseits ebenfalls ein Wegmesssystem 3.2 zugeordnet, welches über Verbindungsleitungen 5 mit einer Steuerung 14 in Verbindung steht.

Das Führungselement 2 ist über Lagerelemente 8 um die Achse A verdrehbar im Gehäuse 1 gelagert.

Das Führungselement 2 steht mit einem Gashebel 6 in Verbindung, welcher aus einem Führungsschlitz 7 aus dem Gehäuse 1 herausragt. Bevorzugt ist der Führungsschlitz 7, wie insbesondere auch in Figur 2 dargestellt, radial umlaufend im Gehäuse 1 vorgesehen.

Dem Gashebel 6 und/oder dem Führungselement 2 ist ein Kraftsensor 13 zugeordnet, welcher ebenfalls über die Verbindungsleitung 5, sowie auch die Regelungseinrichtung 9 mit der Steuerung 14 in Verbindung steht.

Das Wegmesssystem 3.1 kann ebenfalls mit der Steuerung 14 verbunden sein.

Wie aus Figur 2 ersichtlich ist, lässt sich der Gashebel 6 manuell um die Achse A rotatorisch bewegen, wobei eine Bewegung auf die Wegmesssysteme 3.1, 3.2 mechanisch übertragbar ist. Diese liefern die entsprechenden Signale ggf. über einen Rechner zum Triebwerk, um das Triebwerk in Gang zu stetzen. Je nach Position des Gashebels 6 lässt sich der Betriebszustand des Triebwerkes erkennen.

Fällt beispielsweise die Regelungsreinrichtung 9, insbesondere der Regelungsmotor aus, so lässt sich manuell durch rotatorisches Verdrehen des Führungselementes 2 mittels des Gashebels 6 das Triebwerk regeln, da die Wegmesssysteme 3.1 bzw. 3.2 die entsprechenden Signale induktiv, magnetisch oder auf optischem Wege übermitteln.

Somit ist das Triebwerk und insbesondere die Steuerung des Triebwerkes durch einen Energieausfall, beispielsweise der Regelungseinrichtung 9, insbesondere des Regelungsmotors abgesichert.

In dem Ausführungsbeispiel der vorliegenden Erfindung gemäss Figur 3 ist innerhalb des Führungselementes 2, wie gestrichelt dargestellt, die Regelungseinrichtung 9, insbesondere der Regelungsmotor drehbar gelagert, wobei diese miteinander im Eingriff stehen. Dabei stützt sich der Regelungsmotor bzw. die Regelungseinrichtung 9 ausserhalb des Führungselementes 2 am Gehäuse 1 ab und ist mit diesem über einen Flansch 10 wiederlösbar fest verbunden.

Dies ermöglicht eine kompakte und kostengünstig herzustellende Bauweise.

Wird beispielsweise mittels eines Autopiloten ein Flugzeug betrieben, so wird mittels des Regelungsmotors 9 der Gashebel 6 entsprechend der Steuerung des Flugzeuges mitbewegt, so dass der Pilot in jeder Lage den Betriebszustand des Triebwerkes anhand der Position des Gashebels 6 im Führungsschlitz erkennt.

Gleichzeitig wird bei einem manuellen Betrieb entweder über den Regelungsmotor 9 und/oder über das Wegmesssystem 3.1, 3.2 ein Betriebszustand an einen hier nicht dargestellten Rechner des Flugzeuges übermittelt, ggf. auch über die Steuerung 14, welcher dann das entsprechende Triebwerk direkt ansteuert.

Insbesondere ist von Vorteil bei der vorliegenden Erfindung, dass manuell der Gashebel 6 bzw. bei einem Ausfall des Regelungsmotors getätigt werden kann und dass der Pilot aufgrund der rotatorischen drehbaren Lage des Gashebels in seiner Position erkennt, in welchem Betriebszustand sich das Triebwerk zur Zeit befindet.

Er kann manuell rein mechanisch den Gashebel verschieben, wodurch eine rotatorische Bewegung des Führungselementes 2 auf die Wegmesssysteme 3.1, 3.2 übertragen wird. Dort wird diese Drehbewegung ermittelt und an den entsprechenden Rechner zur Steuerung des Triebwerkes weitergeleitet.

Daher ist auch beispielsweise bei einem Energieausfall eine Übermittlung des elektrischen Signales vom Wegmesssystem 3.1, 3.2 zum Triebwerk noch möglich. Dies ist bei der vorliegenden Erfindung von elementarer Bedeutung, da die Sicherheit des Flugzeuges mit einer entsprechenden Vorrichtung zum Betreiben eines Triebewerkes erheblich erhöht wird.

Bei einem elektrischen Ausfall des Systems findet keine Selbsthemmung statt. Der Gashebel 6 kann manuell von hand bewegt werden, wobei die ursprüngliche Position und Stellung des Betriebszustandes des Triebwerkes in jeder Lage ersichtlich ist.

Die Steuerung 14 übernimmt zumindest teilweise die geführte Bewegung des Gashebels, z.B. durch Bewegen des Führungselementes 2 mittels der Regelungseinrichtung 9, insbesondere Regelungsmotor, wenn beispielsweise der Kraftsensor 13 betätigt ist. Dann schaltet entsprechend der Regelungsmotor 9 hinzu, um die manuelle Bewegung des Gashebels 6 elektrisch zu unterstützen. Die Steuerung 14 kann externer Bestandteil des Gehäuses 1 bzw. der Regelungseinrichtung 9 sein. Dies soll vom vorliegenden Erfindungsgedanken umfasst sein.

Fliegt das Flugzeug im Autopilotenbetrieb, so wird über die Regelungseinrichtung 9 der Gashebel entsprechend mitbewegt.

Wird der Gashebel 6 manuell betätigt, so erfolgt eine manuelle Krafteinleitung auf den Gashebel 6, wie in Doppelpfeilrichtung gemäss Figur 2 dargestellt, mit einer Kraft F, die in dem Sensor 13 ermittelt wird. Dieser schaltet dann über die Steuerung 14 die Regelungseinrichtung 9 hinzu, so dass eine manuelle Drehbewegung des Gashebels 6 durch die Regelungseinrichtung 9, insbesondere den Regelungsmotor automatisch unterstützt und geführt wird.

Hierdurch lässt sich sehr leicht und angenehm der Gashebel 6 um die Achse A vor oder zurückbewegen.

Der Pilot muss keinesfalls manuell mit eigener Kraft den Gashebel 6, insbesondere das Führungselement 2 in entsprechende Drehung versetzen, um einen Betriebszustand eines angeschlossenen Triebwerkes zu verändern.

### Positionszahlenliste

| | | | | | |
|---|---|---|---|---|---|
| 1 | Gehäuse | 34 | | 67 | |
| 2 | Führungselement | 35 | | 68 | |
| 3 | Wegmesssystem | 36 | | 69 | |
| 4 | Wellenkupplung | 37 | | 70 | |
| 5 | Verbindungsleitung | 38 | | 71 | |
| 6 | Gashebel | 39 | | 72 | |
| 7 | Führungsschlitz | 40 | | 73 | |
| 8 | Lagerelement | 41 | | 74 | |
| 9 | Regelungseinrichtung | 42 | | 75 | |
| 10 | Flansch | 43 | | 76 | |
| 11 | | 44 | | 77 | |
| 12 | | 45 | | 78 | |
| 13 | Kraftsensor | 46 | | 79 | |
| 14 | Steuerung | 47 | | | |
| 15 | | 48 | | | |
| 16 | | 49 | | R₁ | Vorrichtung |
| 17 | | 50 | | R₂ | Vorrichtung |
| 18 | | 51 | | | |
| 19 | | 52 | | | |
| 20 | | 53 | | | |
| 21 | | 54 | | | |
| 22 | | 55 | | F | Kraft |
| 23 | | 56 | | A | Achse |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Steuern eines Triebwerkes, insbesondere eines Flugzeuges mit zumindest einen in einem Gehäuse (1) bewegbar gelagerten und einem Führungselement (2) zugordneten Gashebel (6) und einer Regelungseinrichtung (9) zum zusätzlichen automatischen Antreiben des Gashebels (6),
**dadurch gekennzeichnet,**
**dass** zur Unterstützung einer manuellen, rotatorischen Bewegung des Gashebels (6) die Regelungseinrichtung (9) auf ein Signal eines dem Gashebel (6) und/oder dem Führungselement (2) zugeordneten Kraftsensors (13) einschaltbar ist.

2. Vorrichtung nach Anspruch 1, **dadurch gekennzeichnet, dass** eine rotatorische, manuelle und/oder automatisch gesteuerte Bewegung des Gashebels (6) permanent direkt oder indirekt auf ein Wegmesssystem (3.1, 3.2) mechanisch oder elektrisch übertragbar ist.

3. Vorrichtung nach Anspruch 1 oder 2, **dadurch gekennzeichnet, dass** der Gashebel (6) dem, um eine Achse (A) drehbaren Führungselement (2) zugeordnet ist, welches direkt oder indirekt über die Regelungseinrichtung (9), insbesondere einen Regelungsmotor antreibbar ist.

4. Vorrichtung nach wenigstens einem der Ansprüche 1 bis 3, **dadurch gekennzeichnet, dass** eine rotatorische, mechanische und/oder automatische Bewegung des Gashebels (6) mechanisch an die Bewegung eines Wegmesssystems (3.1, 3.2) gekoppelt ist.

5. Vorrichtung nach wenigstens einem der Ansprüche 1 bis 4, **dadurch gekennzeichnet, dass** durch eine rotatorische Bewegung des Gashebels (6) das Führungselement (2) entsprechend um eine Achse (A) verdrehbar ist, wobei dem Führungselement (2) einends das Wegmesssystem (3.1) zugeordnet ist.

6. Vorrichtung nach wenigstens einem der Ansprüche 1 bis 5, **dadurch gekennzeichnet, dass** andernends des Führungselementes (2) die Regelungseinrichtung (9) als Regelungsmotor mit ggf. einem zugeordneten Wegmesssystem (3.2) direkt oder indirekt angreift.

7. Vorrichtung nach wenigstens einem der Ansprüche 1 bis 6, **dadurch gekennzeichnet, dass** das Wegmesssystem (3.1, 3.2) als Wegaufnehmer von induktiver, magnetischer oder optischer Art ist.

8. Vorrichtung nach wenigstens einem der Ansprüche 1 bis 7, **dadurch gekennzeichnet, dass** das Wegmesssystem (3.1, 3.2) und/oder der Kraftsensor (13) und/oder die Regelungseinrichtung (9) mit einer Steuerung (14) in Verbindung steht, um eine manuelle Bewegung des Gashebels (6) durch Hinzuschalten der Regelungseinrichtung (9) zu unterstützen, wobei die jeweiligen Positionen des Gashebels (6) entsprechend des Betriebszustandes über die Wegmesssysteme (3.1, 3.2) an ein Triebwerk weiterleitbar sind.

9. Vorrichtung nach wenigstens einem der Ansprüche 1 bis 8, **dadurch gekennzeichnet, dass** der Gashebel (6) in einem Führungsschlitz (7) des Gehäuses (1) geführt ist, welcher in etwa radial verlaufend zum Führungselement (2) angeordnet ist.

10. Vorrichtung nach Anspruch 9, **dadurch gekennzeichnet, dass** das Führungselement (2) gegenüber dem Gehäuse (1) verdrehbar angeordnet ist.

11. Vorrichtung nach wenigstens einem der Ansprüche 1 bis 10, **dadurch gekennzeichnet, dass** die Regelungseinrichtung (9), insbesondere der Regelungsmotor als interner oder externer Bestandteil mit dem Führungselement (2) im Eingriff steht.

12. Vorrichtung nach wenigstens einem der Ansprüche 1 bis 11, **dadurch gekennzeichnet, dass** die Regelungseinrichtung (9), insbesondere der Regelungsmotor feststehend mit dem Gehäuse (1) verbunden ist.

## Claims

1. Device for controlling a propulsion unit, in particular of an aircraft, comprising at least one throttle lever (6), which is mounted movably in a housing (1) and associated with a guide element (2), and a regulating device (9) for additionally automatically operating the throttle lever (6),
**characterized in**
**that** for assisting a manual, rotary movement of the throttle lever (6) the regulating device (9) may be switched on in response to a signal of a force sensor (13), which is associated with the throttle lever (6) and/or the guide element (2).

2. Device according to claim 1, **characterized in that** a rotary, manual and/or automatically controlled movement of the throttle lever (6) is mechanically or electrically transmissible permanently directly or indirectly to a position measuring system (3.1, 3.2).

3. Device according to claim 1 or 2, **characterized in that** the throttle lever (6) is associated with the guide element (2), which is rotatable about an axis (A) and is operable directly or indirectly by means of the regulating device (9), in particular a servomotor.

4. Device according to at least one of claims 1 to 3, **characterized in that** a rotary, mechanical and/or automatic movement of the throttle lever (6) is coupled mechanically to the movement of a position measuring system (3.1, 3.2).

5. Device according to at least one of claims 1 to 4, **characterized in that** by means of a rotary movement of the throttle lever (6) the guide element (2) is rotatable in a corresponding manner about an axis (A), wherein the position measuring system (3.1) is associated with the guide element (2) at one end.

6. Device according to at least one of claims 1 to 5, **characterized in that** the regulating device (9) in the form of a servomotor with optionally an associated position measuring system (3.2) acts directly or indirectly on the other end of the guide element (2).

7. Device according to at least one of claims 1 to 6, **characterized in that** the position measuring system (3.1, 3.2) is in the form of a position pickup of an inductive, magnetic dr optical type.

8. Device according to at least one of claims 1 to 7, **characterized in that** the position measuring system (3.1, 3.2) and/or the force sensor (13) and/or the regulating device (9) is connected to a controller (14) in order to assist a manual movement of the throttle lever (6) by additional operation of the regulating device (9), wherein the respective positions of the throttle lever (6) are transmissible in accordance with the operating state by the position measuring systems (3.1, 3.2) to a propulsion unit.

9. Device according to at least one of claims 1 to 8, **characterized in that** the throttle lever (6) is guided in a guide slot (7) of the housing (1) that is disposed extending approximately radially relative to the guide element (2).

10. Device according to claim 9, **characterized in that** the guide element (2) is disposed rotatably relative to the housing (1).

11. Device according to at least one of claims 1 to 10, **characterized in that** the regulating device (9), in particular the servomotor is in engagement as an internal or external component with the guide element (2).

12. Device according to at least one of claims 1 to 11, **characterized in that** the regulating device (9), in particular the servomotor is connected in a fixed manner to the housing (1).

## Revendications

1. Dispositif pour commander un groupe moteur, en particulier d'un avion, avec au moins une manette de puissance (6) montée de manière déplaçable dans un boîtier (1) et associée à un élément de guidage (2) et un moyen de régulation (9) destiné à l'actionnement automatique additionnel de la manette de puissance (6),
**caractérisé par le fait**
**qu'**en vue d'assister un mouvement de rotation manuel de la manette de puissance (6), le moyen de régulation (9) peut être enclenché à un signal d'un capteur de puissance (13) associé à la manette de puissance (6) et/ou à l'élément de guidage (2).

2. Dispositif selon la revendication 1, **caractérisé par le fait qu'**un mouvement de rotation commandé manuellement et/ou automatiquement de la manette de puissance (6) peut être transmis de manière mécanique ou électrique en permanence, directement ou indirectement, à un système de mesure de trajet (3.1, 3.2).

3. Dispositif selon la revendication 1 ou 2, **caractérisé par le fait que** la manette de puissance (6) est associée à l'élément de guidage (2), rotatif autour d'un axe (A), qui peut être entraîné directement ou indirectement par l'intermédiaire du moyen de régulation (9), en particulier un moteur de régulation.

4. Dispositif selon au moins l'une des revendications 1 à 3, **caractérisé par le fait qu'**un mouvement de rotation mécanique et/ou automatique de la manette de puissance (6) est couplé mécaniquement au mouvement d'un système de mesure de trajet (3.1, 3.2).

5. Dispositif selon au moins l'une des revendications 1 à 4, **caractérisé par le fait que**, par un mouvement de rotation de la manette de puissance (6), l'élément de guidage (2) peut être tourné en conséquence autour d'un axe (A), à l'élément de guidage (2) étant associé, à une extrémité, le système de mesure de trajet (3.1).

6. Dispositif selon au moins l'une des revendications 1 à 5, **caractérisé par le fait que**, à l'autre extrémité de l'élément de guidage (2), le moyen de régulation (9) sous forme de moteur de régulation vient en prise, directement ou indirectement, avec un système de mesure de trajet (3.2) éventuellement associé.

7. Dispositif selon au moins l'une des revendications 1 à 6, **caractérisé par le fait que** le système de mesure de trajet (3.1, 3.2) sous forme de capteur de trajet est de type inductif, magnétique ou optique.

8. Dispositif selon au moins l'une des revendications 1 à 7, **caractérisé par le fait que** le système de mesure de trajet (3.1, 3.2) et/ou le capteur de puissance (13) et/ou le moyen de régulation (9) est en communication avec une commande (14), pour assister un mouvement manuel de la manette de puissance (6) par commutation en intervention du moyen de régulation (9), les positions respectives de la manette de puissance (6) selon l'état de fonctionnement pouvant être transmises à un groupe moteur par l'intermédiaire du système de mesure de trajet (3.1, 3.2).

9. Dispositif selon au moins l'une des revendications 1 à 8, **caractérisé par le fait que** la manette de puissance (6) est guidée dans une fente de guidage (7) du boîtier (1) qui est disposée de manière à s'étendre environ radialement par rapport à l'élément de guidage (2).

10. Dispositif selon la revendication 9, **caractérisé par le fait que** l'élément de guidage (2) est disposé de manière rotative par rapport au boîtier (1).

11. Dispositif selon au moins l'une des revendications 1 à 10, **caractérisé par le fait que** le moyen de régulation (9), en particulier le moteur de régulation, est en prise comme composant interne ou externe avec l'élément de guidage (2).

12. Dispositif selon au moins l'une des revendications 1 à 11, **caractérisé par le fait que** le moyen de régulation (9), en particulier le moteur de régulation, est connecté de manière stationnaire au boîtier (1).
